(19) Europäisches Patentamt
European Patent Office
Office européen des brevets

(11) Veröffentlichungsnummer: **0 278 903 B1**

(12) # EUROPÄISCHE PATENTSCHRIFT

(45) Veröffentlichungstag der Patentschrift: **25.09.91 Patentblatt 91/39**

(51) Int. Cl.[5]: **C09B 62/503,** D06P 3/66

(21) Anmeldenummer: **88810053.4**

(22) Anmeldetag: **01.02.88**

(54) **Reaktivfarbstoffe, deren Herstellung und Verwendung.**

(30) Priorität: **06.02.87 CH 444/87**

(43) Veröffentlichungstag der Anmeldung: **17.08.88 Patentblatt 88/33**

(45) Bekanntmachung des Hinweises auf die Patenterteilung: **25.09.91 Patentblatt 91/39**

(84) Benannte Vertragsstaaten: **BE CH DE FR GB IT LI**

(56) Entgegenhaltungen:
**EP-A- 0 174 909**
**EP-A- 0 210 951**

(73) Patentinhaber: **CIBA-GEIGY AG**
**Klybeckstrasse 141**
**CH-4002 Basel (CH)**

(72) Erfinder: **Tzikas, Athanassios, Dr.**
**Muttenzerstrasse 78**
**CH-4133 Pratteln (CH)**
Erfinder: **Aeschlimann, Peter**
**Sandweg 16**
**CH-4123 Altschwil (CH)**

**EP 0 278 903 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Anmeldung betrifft neue verbesserte Reaktivfarbstoffe, die sich besonders für das Färben von cellulosehaltigen Fasermaterialien nach dem Ausziehverfahren oder dem Kaltverweilverfahren eignen, und die nass- und lichtechte Färbungen ergeben; sowie Verfahren zur Herstellung dieser Farbstoffe, und deren Verwendung zum Färben oder Bedrucken von textilen Materialien.

Gegenstand der Erfindung sind Reaktivfarbstoffe der Formel

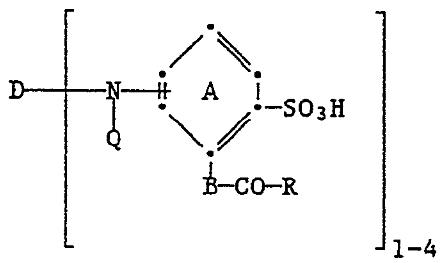

(1),

worin D der Rest eines Anthrachinon-, Phthalocyanin-, Formazan-, Azomethin-, Dioxazin-, Phenazin-, Triphenylmethan-, Xanthen-, Thioxanthon-, Nitroaryl-, Naphthochinon-, Pyrenchinon- oder Perylentetracarbimid-Farbstoffes; Q Wasserstoff oder Alkyl mit 1 bis 4 Kohlenstoffatomen, das durch Carboxy, Sulfo, Cyan, Hydroxy, $C_1$-$C_4$-Alkoxy oder Halogen substituiert sein kann; B ein Rest $-(CH_2)_n-$, $-O-(CH_2)_n$ oder $-NH-(CH_2)_n$, wobei das Sauerstoffatom oder die -NH-Gruppe an das Ringsystem A gebunden ist; n = 1 bis 6; R ein Rest der Formel

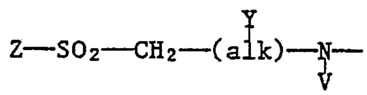

(1a)

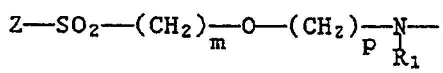

(1b)

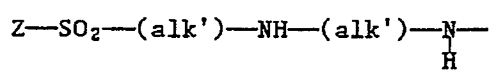

(1c)

oder

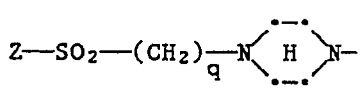

(1d);

Z β-Sulfatoäthyl, β-Thiosulfatoäthyl, β-Phosphatoäthyl, β-Acyloxyäthyl, β-Halogenäthyl oder Vinyl; alk ein Alkylenrest mit 1 bis 6 C-Atomen oder dessen verzweigte Isomere; Y Wasserstoff, Chlor, Brom, Fluor, Hydroxy, Sulfato, Acyloxy mit 1 bis 4 C-Atomen, Cyano, Carboxy, Alkoxycarbonyl mit 1 bis 5 C-Atomen, Carbamoyl, oder ein Rest $-SO_2-Z$, worin Z die oben angegebene Bedeutung hat; V Wasserstoff oder ein Alkylrest mit 1 bis 4 C-Atomen, der durch Carboxy-oder Sulfogruppen oder durch deren Derivate, Alkoxygruppen mit 1 oder 2 C-Atomen, Halogen oder Hydroxy substituiert sein kann;
oder ein Rest

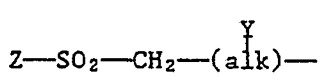

worin Z, alk und Y die angegebenen Bedeutungen haben; $R_1$ Wasserstoff oder $C_1$-$C_6$-Alkyl; alk' unabhängig voneinander Polymethylenreste mit 2 bis 6 C-Atomen oder deren verzweigte Isomere; m = 1 bis 6, p = 1 bis 6 und q = 1 bis 6 ist.

Der Rest D in Formel (1) kann an seinem Grundgerüst die bei organischen Farbstoffen üblichen Substituenten gebunden enthalten.

Als Beispiele für weitere Substituenten im Rest D seien genannt: Alkylgruppen mit 1 bis 4 Kohlenstoffatomen, wie Methyl, Aethyl, Propyl, Isopropyl oder Butyl, Alkoxygruppen mit 1 bis 4 Kohlenstoffatomen, wie Methoxy, Aethoxy, Propoxy, Isopropoxy oder Butoxy, Acylaminogruppen mit 1 bis 8 Kohlenstoffatomen, wie Acetylamino, Propionylamino oder Benzoylamino, Amino, Alkylamino mit 1 bis 4 Kohlenstoffatomen, wie Methylamino, Aethylamino, Propylamino, Isopropylamino oder Butylamino, Phenylamino, N,N-Di-β-hydroxyäthylamino, N,N-Di-β-sulfatoäthylamino, Sulfobenzylamino, N,N-Disulfobenzylamino, Alkoxycarbonyl mit 1 bis 4 Kohlenstoffatomen im Alkoxyrest, wie Methoxycarbonyl oder Aethoxycarbonyl, Alkylsulfonyl mit 1 bis 4 Kohlenstoffatomen, wie Methylsulfonyl oder Aethylsulfonyl, Trifluormethyl, Nitro, Cyano, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Aethylcarbamoyl, Sulfamoyl, N-Alkylsulfamoyl mit 1 bis 4 Kohlenstoffatomen, wie N-Methylsulfamoyl, N-Aethylsulfamoyl, N-Propylsulfamoyl, N-Isopropylsulfamoyl oder N-Butylsulfamoyl, N-(β-hydroxyäthyl)-sulfamoyl, N,N-Di-(β-hydroxyäthyl)-sulfamoyl, N-Phenylsulfamoyl, Ureido, Hydroxy, Carboxy, Sulfomethyl oder Sulfo. Vorzugsweise enthält der Rest D eine oder mehrere Sulfonsäuregruppen. Weitere Substituenten im Rest D sind insbesondere Methyl, Aethyl, Methoxy, Aethoxy, Acetylamino, Benzoylamino, Amino, Chlor, Brom, Ureido, Hydroxy, Carboxy, Sulfomethyl oder Sulfo.

Der Rest Q ist, falls es sich um einen Alkylrest handelt, geradkettig oder verzweigt; er kann weitersubstituiert sein durch Carboxy, Sulfo, Cyan, Hydroxy, $C_1$-$C_4$-Alkoxy oder Halogen. Als Beispiele für Q seien die folgenden Reste genannt: Methyl, Aethyl, Propyl, Isopropyl, Butyl, Isobutyl, sec.-Butyl, tert.-Butyl, Carboxymethyl, β-Carboxyäthyl, β-Carboxypropyl, Sulfomethyl, β-Sulfoäthyl, β-Cyanäthyl, β-Hydroxyäthyl, β-Hydroxybutyl, β-Methoxyäthyl, β-Aethoxyäthyl, β-Methoxypropyl, β-Chloräthyl und γ-Brompropyl. Vorzugsweise ist Q Wasserstoff. Der Rest B enthält 1 bis 6, vorzugsweise 1 bis 4 Kohlenstoffatome; Beispiele für B sind: Methylen, Aethylen, Propylen, Butylen, Methylenoxy, Aethylenoxy, Propylenoxy, Butylenoxy und Aethylenamino.

Als β-Halogenäthyl kommt für Z insbesondere der β-Chloräthylrest und als β-Acyloxyäthyl insbesondere der β-Acetoxyäthylrest in Betracht. Der Alkylenrest alk ist vorzugsweise Methylen, Aethylen, Methylmethylen, Propylen oder Butylen. Der Substituent Y ist als Acyloxyrest insbesondere Acetyloxy, Propionyloxy oder Butyryloxy, und als Alkoxycarbonylrest insbesondere Methoxycarbonyl, Aethoxycarbonyl oder Propyloxycarbonyl. Falls V ein Alkylrest ist, kann dieser Methyl, Aethyl, Propyl, Isopropyl, Butyl, Isobutyl, sec-Butyl oder tert.-Butyl sein. Derivate der Carboxy- oder Sulfogruppe sind z.B. Carbamoyl, N-Methyl-, N-Aethyl-, N,N-Dimethyl-und N,N-Diäthylcarbamoyl, Cyan, Acetyl, Propionyl, Butyryl, Methoxycarbonyl, Aethoxycarbonyl, Propyloxycarbonyl, Sulfamoyl, N-Methyl-, N-Aethyl-, N,N-Dimethyl- und N,N-Diäthylsulfamoyl, Methylsulfonyl, Aethylsulfonyl und Propylsulfonyl. Der Rest $R_1$ ist beispielsweise Methyl, Aethyl, Propyl, Isopropyl, Butyl, Isobutyl, sec.-Butyl, tert.-Butyl, Pentyl oder Hexyl, oder vorzugsweise Wasserstoff. Die Polymethylenreste alk' sind vorzugsweise Aethylen, Propylen oder Butylen. Die Indizes m, p und q sind unabhängig voneinander und vorzugsweise 2, 3 oder 4. Der Index an der eckigen Klammer ist vorzugsweise 1 oder 2, insbesondere, wenn D ein Phthalocyaninrest ist, aber auch 3 oder 4.

Ferner sind in Betracht zu ziehen, Reaktivfarbstoffe der Formel (1), worin der Rest D noch einen weiteren Reaktivrest einschliesst. Die zusätzlichen, in D eingeschlossenen Reaktivreste können über Aminogruppen oder in anderer Weise, z.B. durch eine direkte Bindung an D gebunden sein.

Bevorzugt sind Reaktivfarbstoffe der Formel (1), worin D der Rest eines Anthrachinonfarbstoffes ist.

Insbesondere kommen Reaktivfarbstoffe der Formel (1) in Betracht, worin D der Rest eines Anthrachinonfarbstoffes der Formel

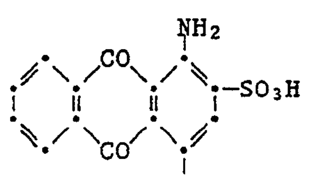

(2)

ist, wobei der Anthrachinonkern durch eine weitere Sulfogruppe substituiert sein kann, und der Farbstoff vorzugsweise mindestens 2 stark wasserlöslichmachende Gruppen enthält.

Weiterhin bevorzugt sind Reaktivfarbstoffe der Formel (1), worin D der Rest eines Phthalocyaninfarbstoffes ist.

Als solche kommen vor allem Reaktivfarbstoffe der Formel (1) in Betracht, worin D der Rest eines Phthalocyaninfarbstoffes der Formel

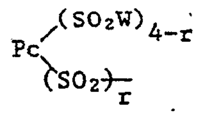 (3),

Pc der Rest eines Kupfer- oder Nickelphthalocyanins; W -OH und/oder $-NR_3R_4$; $R_3$ und $R_4$ unabhängig voneinander Wasserstoff oder Alkyl mit 1 bis 4 Kohlenstoffatomen, das durch Hydroxy, Alkoxy, Hydroxyalkoxy, Sulfo, Sulfato, oder Sulfatoalkoxy substituiert sein kann, oder worin $-NR_3R_4$ einen Morpholinorest bildet; und r = 1 bis 4 ist.

Bevorzugt sind insbesondere Verbindungen der Formel (1), worin Z die β-Sulfatoäthyl-, β-Chloräthyl- oder Vinylgruppe ist.

Der in eckige Klammern eingeschlossene Teil von Formel (1) kann einbis viermal im Molekül vorhanden sein. Falls ein Farbstoff der Formel (1) zwei, drei oder vier derartige Formelteile enthält, können diese gleich oder verschieden sein; vorzugsweise sind sie gleich. Die eckige Klammer umfasst u.a. den Rest R, der selbst wiederum einen Reaktivrest aufweist, und zwar die Gruppierung $Z-SO_2-$ in den Formeln (1a) bis (1d). Der Reaktivrest enthält eine faserreaktive Abgangsgruppe, z.B. wenn Z β-Chloräthyl ist, oder kann nach Art von faserreaktiven Abgangsgruppen wirksam werden, z.B. wenn Z Vinyl ist (Grundlegendes über Reaktivfarbstoffe siehe Venkataraman, K.: The Chemistry of Synthetic Dyes. New York: Academic Press 1972; Vol. VI, Reactive Dyes).

Ein Verfahren zur Herstellung von Reaktivfarbstoffen der Formel (1) ist dadurch gekennzeichnet, dass man einen Farbstoff der Formel

$$D-(X)_{1-4} \qquad (4),$$

worin X ein Halogenatom ist, mit einem Amin der Formel

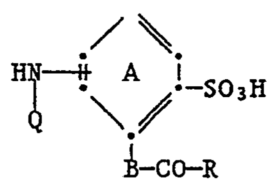 (5),

kondensiert, und gegebenenfalls eine weitere Umwandlungsreaktion anschliesst.

Die beiden Verbindungen der Formeln (4) und (5) werden in einem geeigneten molaren Verhältnis miteinander umgesetzt; dieses richtet sich danach, wieviele abspaltbare Halogenatome X in dem Farbstoff der Formel (4) vorhanden sind.

Eine abgewandelte Ausführungsform des Verfahrens besteht darin, zunächst einen Farbstoff herzustellen, der eine Vorstufe des Reaktivrestes enthält und diese nachträglich in die Endstufe umzuwandeln, z.B. durch Veresterung oder eine Additionsreaktion. Beispielsweise kann man einen Farbstoff, worin Z ein Rest $HO-CH_2CH_2-$ ist, herstellen und das Zwischenprodukt vor oder nach der Acylierung mit Schwefelsäure umsetzen, so dass die Hydroxygruppe in die Sulfatogruppe überführt wird; oder man verwendet einen analogen Farbstoff, worin Z die Gruppe $H_2C=CH-$ ist, und lagert an das Zwischenprodukt Thioschwefelsäure an, wobei ein Rest $HO_3SS-CH_2CH_2-$ entsteht. Die Sulfatierung der Hydroxygruppe in einem Farbstoff der Formel (1) oder einem geeigneten Vorprodukt, erfolgt z.B. durch Umsetzung mit konzentrierter Schwefelsäure bei 0°C bis mässig erhöhter Temperatur.

Die Sulfatierung kann auch durch Reaktion der Hydroxyverbindung mit zwei Aequivalenten Chlorsulfonsäure pro Hydroxygruppe in einem polaren organischen Lösungsmittel, wie beispielsweise N-Methylpyrrolidon, bei 10 bis 80°C erfolgen. Vorzugsweise erfolgt die Sulfatierung durch Eintragen der betreffenden Verbindung in Schwefelsäuremonohydrat bei Temperaturen zwischen 5 und 15°C. Die Einführung eines anderen Restes für Z in eine Verbindung der Formel (1) oder ein Zwischenprodukt anstelle eines Halogenatoms oder der Sulfatogruppe, beispielsweise einer Thiosulfato- oder Phosphatogruppe erfolgt in an sich bekannter Weise.

Ausserdem können Eliminierungsreaktionen an die Synthese angeschlossen werden. Beispielsweise kann man Reaktivfarbstoffe der Formel (1), welche Sulfatoäthylsulfonylreste enthalten, mit halogenwasserstoffspaltenden Mitteln, wie Natriumhydroxid, behandeln, wobei die Sulfatoäthylsulfonylreste in Vinylsulfonylreste übergehen.

Gegebenenfalls ist eine Verfahrensvariante anwendbar, bei welcher man von Farbstoffvorprodukten ausgeht. Diese Variante ist geeignet zur Herstellung von Reaktivfarbstoffen der Formel (1), worin D der Rest eines

aus zwei oder mehr als zwei Komponenten zusammengesetzten Farbstoffes ist, beispielsweise eines Kupfer- oder Nickel-phthalocyanins, oder eines Kupferformazanes. Grundsätzlich lassen sich die Reaktivfarbstoffe der Formel (1) sämtlicher Farbstoffklassen in an sich bekannter Weise oder analog zu bekannten Verfahrensweisen herstellen, indem man von Vorprodukten oder Zwischenprodukten für Farbstoffe, die faserreaktive Reste gemäss Formel (1) enthalten, ausgeht, oder diese faserreaktiven Reste in hierfür geeignete Zwischenprodukte mit Farbstoffcharakter einführt.

Die Kondensation des Farbstoffes der Formel (4) mit dem Amin der Formel (5) erfolgt in an sich bekannter Weise in saurer, neutraler oder alkalischer wässriger Lösung, bei niedriger oder erhöhter Temperatur.

Liegen in den hergestellten Reaktivfarbstoffen zur Metallkomplexbildung befähigte Gruppen, wie Hydroxy, Carboxy, Amino oder Sulfo, vor, können die Reaktivfarbstoffe auch nachträglich metallisiert werden. Wichtige Farbstoffreste D sind, ausser den bereits genannten der Formeln (2) und (3), z.B.

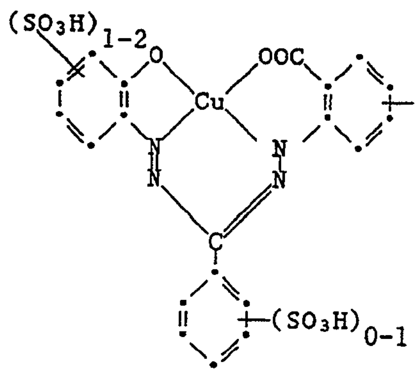

(6a) oder

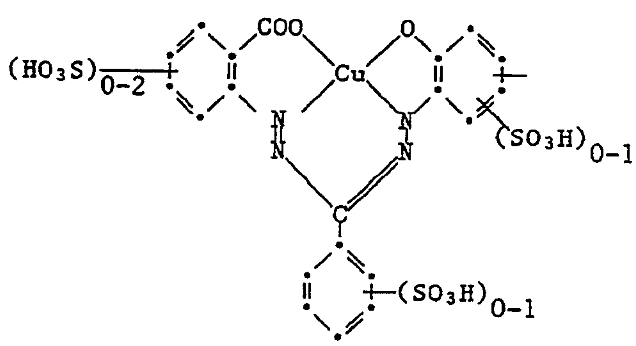

(6b),

worin die Benzolkerne weiterhin durch Alkyl mit 1 bis 4 C-Atomen, Alkoxy mit 1 bis 4 C-Atomen, Alkylsulfonyl mit 1 bis 4 C-Atomen, Halogen oder Carboxy substituiert sein können;

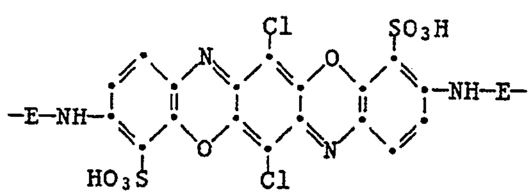

(7),

worin E ein Phenylenrest, der durch Alkyl mit 1 bis 4 C-Atomen, Halogen, Carboxy oder Sulfo substituiert sein kann; oder ein Alkylenrest mit 2 bis 6 C-Atomen ist; und die äusseren Benzolringe in Formel (7) durch Alkyl mit 1 bis 4 C-Atomen, Alkoxy mit 1 bis 4 C-Atomen, Acetylamino, Nitro, Halogen, Carboxy oder Sulfo weitersubstituiert sein können.

Ein gegebenenfalls in D eingeschlossener zusätzlicher Reaktivrest ist insbesondere ein niedrigmolekularer, durch ein abspaltbares Atom oder eine abspaltbare Gruppe substituierter Alkanoyl- oder Alkylsulfonylrest, ein niedrigmolekularer, gegebenenfalls durch ein abspaltbares Atom oder eine abspaltbare Gruppe substituierter Alkenoyl- oder Alkensulfonylrest, ein über eine Carbonyl- oder Sulfonylgruppe, durch ein abspaltbares Atom oder eine abspaltbare Gruppe substituierter carbo- oder heterocyclischer, einen Vier-, Fünf- oder Sechsring enthaltender Rest oder ein direkt über ein Kohlenstoffatom gebundener, durch ein abspaltbares Atom oder eine abspaltbare Gruppe substituierter Triazin- oder Pyrimidinrest, oder enthält einen solchen. Als Beispiele für derartige Reaktivreste seien genannt, ein über eine Aminogruppe gebundener, Halogentome enthaltender sechsgliedriger heterocyclischer Rest, wie ein Halogentriazin- oder Halogenpyrimidinrest oder ein aliphatischer Acylrest, wie ein Halogenacetyl- oder Halogenpropionylrest.

Die Verbindungen der Formel (5). Sie können hergestellt werden, indem man entsprechende Nitrophenyl-, Nitrophenoxy- oder Nitrophenylamino-alkansäurechloride oder analoge Naphthalinverbindungen mit Aminen der Formel

$$H{-}R \qquad (8),$$

welche den Resten der Formeln (1a) bis (1d) entsprechen, kondensiert, und die Nitrogruppe zur Aminogruppe reduziert.

Die Umsetzung wird vorzugsweise in einem hochsiedenden organischen Lösungsmittel, z.B. Nitrobenzol, durchgeführt. Die Reduktion der Nitrogruppe zur Aminogruppe erfolgt in an sich bekannter Weise durch katalytische Hydrierung mit Pd/Kohlenstoff in Aethanol, Essigester oder Tetrahydrofuran bei Raumtemperatur bis etwa 40°C. Die Reduktion kann auch mit Fe/Salzsäure oder Fe/Essigsäure in wässriger Lösung durchgeführt werden.

Nach einer anderen, in der DE-OS 20 40 620 beschriebenen Methode kann man das Säurechlorid mit einem ungesättigten aliphatischen Amin umsetzen, und an die Doppelbindung des Säureamids 2-Mercaptoäthanol bei Temperaturen zwischen 50°C und 180°C mit Hilfe katalytischer Mengen eines Radikalbildners oder von Schwefel anlagern. Die dadurch erhaltenen Hydroxyäthylthioäther-Verbindungen können auch hergestellt werden, indem man das Säurechlorid mit einem Halogenalkylamin kondensiert, und das Kondensationsprodukt mit 2-Mercaptoäthanol und Natriumalkoholat in Alkohol erwärmt. Die Thioätherverbindungen werden dann noch zu den entsprechenden Sulfonen oxydiert.

Die Oxydation der Thioätherverbindungen zu den Sulfonen kann nach verschiedenen Methoden erfolgen, beispielsweise mit Wasserstoffperoxid mit oder ohne Zusatz von Wolfram- oder Vanadinverbindungen als Katalysatoren, ferner mit Peressigsäure, Kaliumpermanganat oder Chromsäure, oder mit Chlor/Salzsäure je in wässrigem, wässrig-organischem oder organischem Medium.

Die so erhältlichen Carbonsäureamide, in denen die Gruppierung $-SO_2-Z$ eine β-Hydroxyäthylsulfonylgruppe darstellt, können durch Behandeln mit Sulfatierungsmitteln, Phosphorylierungsmitteln, Halogenierungsmitteln, Alkyl- oder Arylsulfonsäurehalogeniden, Alkyl- oder Arylcarbonsäurehalogeniden oder Alkyl- oder Arylcarbonsäureanhydriden in die entsprechenden Farbstoffvorprodukte übergeführt werden, in denen die Gruppierung $-SO_2-Z$ die Gruppierung $-SO_2-CH_2-CH_2-O-SO_3H$, $-SO_2-CH_2-CH_2-O-PO_3H_2$, $-SO_2-CH_2-CH_2$-Halogen, $-SO_2-CH_2-CH_2-O-CO-CH_3$ oder $-SO_2-CH_2-CH_2-O-CO-C_6H_5$ bedeutet. Die so erhaltenen Produkte können ihrerseits durch Behandeln mit alkalisch wirkenden Mitteln, wie beispielsweise Alkalihydroxid oder Alkalicarbonat, wie Natriumhydroxyd oder Natriumcarbonat, in entsprechende Verbindungen übergeführt werden, in denen die Gruppierung $-SO_2-Z$ die Gruppierung $-SO_2-CH=CH_2$ bedeutet. Die so erhaltenen Produkte können wiederum durch Umsetzung (Addition) mit Salzen der Thioschwefelsäure, wie Natriumthiosulfat, in Verbindungen übergeführt werden, in denen die Gruppierung $-SO_2-Z$ die Gruppierung $-SO_2-CH_2-CH_2-S-SO_3H$ bedeutet.

Geeignete Sulfatierungsmittel sind hierbei beispielsweise konzentrierte Schwefelsäure sowie Chlorsulfonsäure und Amidosulfonsäure oder andere Schwefeltrioxid abgebende Verbindungen. Geeignete Phosphorylierungsmittel sind hierbei beispielsweise konzentrierte Phosphorsäure, Pyro-, Meta- oder Polyphosphorsäure, Polyphosphorsäurealkylester, Phosphoroxichlorid oder Gemische aus Phosphorsäure und Phosphor-(V)-oxid. Als Halogenierungsmittel können beispielsweise Thionylchlorid oder Thionylbromid verwendet werden.

Die als Ausgangsverbindungen verwendeten Amine der Formel (8) können analog dem Verfahren des Beispiels 1 der DE-OS 26 14 550 hergestellt werden.

Die Kondensationen der Farbstoffe der Formel (4) mit den Aminen der Formeln (5) erfolgen vorzugsweise in wässriger Lösung oder Suspension bei niedrigen Temperaturen, und bei stark saurem, neutralem bis schwach alkalischem pH-Wert. Vorteilhaft wird der bei der Kondensation freiwerdende Halogenwasserstoff laufend durch Zugabe wässriger Alkalihydroxide, -carbonate oder -bicarbonate neutralisiert. Als Amine der Formel (5) setzt man die freien Amine oder deren Salze, bevorzugt in Form des Hydrochlorids, ein. Die Umsetzung wird bei Temperaturen etwa zwischen 0 und 100°C, bevorzugt zwischen 25 und 75°C, unter Zusatz säurebindender Mittel, bevorzugt Natriumcarbonat, in einem pH-Bereich von 2 bis 8, bevorzugt 5 bis 6,5, durchgeführt.

Die Reaktivfarbstoffe der Formel (1) eignen sich zum Färben und Bedrucken der verschiedensten Materialien, wie Seide, Leder, Wolle, Polyamidfasern und Polyurethanen, und besonders cellulosehaltiger Fasermaterialien aller Art. Solche Fasermaterialien sind beispielsweise die natürlichen Cellulosefasern, wie Baumwolle, Leinen und Hanf, sowie Zellstoff und regenerierte Cellulose. Die Reaktivfarbstoffe der Formel (1) sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Besonders geeignet sind sie für das sogenannte Kaltverweilverfahren, wonach der Farbstoff zusammen mit dem Alkali auf dem Foulard aufgebracht wird und danach durch mehrstündiges Lagern bei Raumtemperatur fixiert wird. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Falls die Reaktivfarbstoffe der Formel (1), worin D der Rest eines Anthrachinonfarbstoffes ist, eine ungenügende Löslichkeit in der alkalischen Färbeflotte aufweisen, kann dieser Mangel in der aus der Literatur bekannten Weise durch Zusatz von Dispergatoren oder anderen nichtfarbigen Verbindungen z.B. ein Naphthalinsulfonsäure-Formaldehyd-Kondensat oder insbesondere Anthrachinon-2-sulfonsäure, behoben werden.

Die Reaktivfarbstoffe der Formel (1) zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch und die nicht fixierten Anteile können leicht ausgewaschen werden, wobei die Differenz zwischen Ausziehgrad und Fixiergrad bemerkenswert klein, d.h. der Seifverlust sehr gering ist. Die Reaktivfarbstoffe der Formel (1) eignen sich auch besonders zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemässen Farbstoffen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Aus der EP-A-0 210 951 sind ähnliche Farbstoffe bekannt, die sich von den erfindungsgemässen Farbstoffen in charakteristischer Weise dadurch unterscheiden, dass der Reaktivrest R über ein $-CH_2-NH-CO-NH-$ Brückenglied gebunden ist, während in den erfindungsgemässen Farbstoffen der Reaktivrest R über ein $-NH-CH_2-CO-NH-$, $-CH_2-CO-NH-$ oder $-O-CH_2-CO-NH-$ Brückenglied gebunden ist.

Die nachfolgenden Beispiele dienen zur Erläuterung der Erfindung. Die Temperaturen sind in Celsiusgraden angegeben, Teile sind Gewichtsteile, die Prozentangabe beziehen sich auf Gewichtsprozente, sofern nicht anders vermerkt. Gewichtsteile stehen zu Volumenteilen im Verhältnis von Kilogramm zu Liter.

Beispiel 1

| | |
|---|---|
| 11,5 Teile | 1-Amino-2-sulfonsäure-4-bromanthrachinon und |
| 12 Teile | 1-Amino-4-β-(β'-hydroxyäthylsulfonyl)äthylaminocarbonylmethoxybenzol-3-sulfonsäure werden mit |
| 120 Teilen | Wasser suspendiert. Bei Raumtemperatur werden |
| 26 Teile | Natriumhydrogencarbonat eingestreut, wobei der pH-Wert 8,5 erreicht wird. Die Suspension wird auf 75°C erwärmt. Bei 70 bis 75°C und innert 3 Stunden, werden in 12 Portionen |
| 0,3 Teile | Kupferpulver/Kupfer-I-chlorid 1:1 eingetragen. Nach einer weiteren Stunde bei 75°C ist die Reaktion beendet. Die Suspension wird auf Raumtemperatur abgekühlt und mit |
| 13 g | Natriumchlorid ausgesalzen und abfiltriert. |

Die so erhaltene Paste wird getrocknet und zur Herstellung des Schwefelsäureesters in die dreifache Gewichtsmenge Schwefelsäure-Monohydrat eingetragen und bis zur vollständigen Lösung gerührt. Dann giesst man die Farbstofflösung auf Eis, wobei der Esterfarbstoff ausfällt. Er wird abfiltriert, sodann in einer Mischung aus Eis/Wasser angerührt und nach dem Neutralisieren mit Kaliumcarbonat durch Einstreuen von Kaliumchlorid ausgesalzen, abfiltriert und getrocknet.

Der gebildete Reaktivfarbstoff der Formel

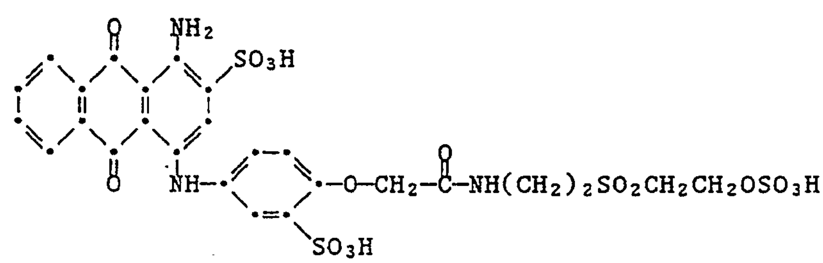

färbt Baumwolle in rein blauen Tönen.

Analog können folgende Farbstoffe synthetisiert werden:

Nr.

2

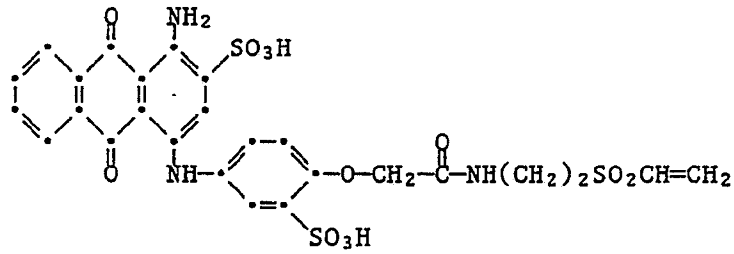

3

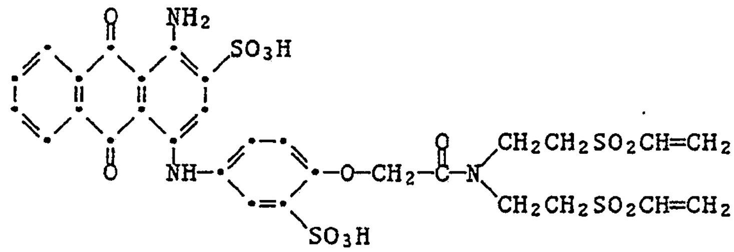

4

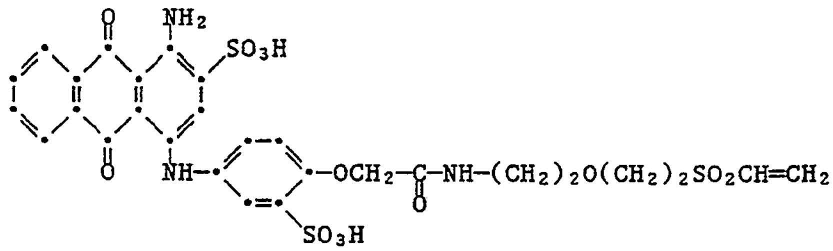

5

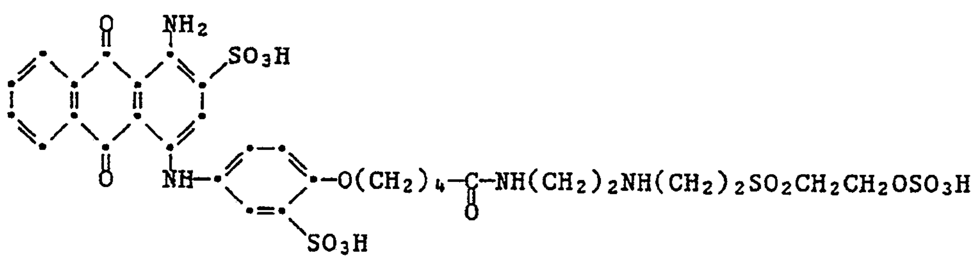

Beispiel 6

300 Teile Chlorsulfonsäure werden bei Raumtemperatur vorgelegt. Nun werden

36 Teile Kupferphthalocyanin portionenweise innert einer Stunde eingetragen. Die Temperatur wird nun langsam innert zwei Stunden auf 110°C erhöht. Innert einer Stunde wird die Temperatur auf 135°C erhöht. Unter gutem Rühren wird die Reaktionslösung 6 1/2 Stunden bei 130 bis 135°C gerührt, anschliessend auf Raumtemperatur abgekühlt und auf Eis/Wasser-Mischung ausgetragen; Endvolumen 2,5 Liter. Nun wird mit

37 Teilen Natriumchlorid versetzt und filtriert. Das Nutschgut wird mit Eiswasser (1,5 % NaCl) gewaschen, bis Kongorot-Indikatorpapier sich nicht mehr verfärbt.

Die 250 Teile Paste werden mit

800 Teilen Eiswasser suspendiert, pH 2,5 bis 3,0.

Nun wird eine Lösung von

63 Teilen 1-Amino-4-β-(β'-chloräthylsulfonyl)äthylaminocarbonylmethoxybenzol-3-sulfonsäure-hydrochlorid, gelöst in

200 Teilen Wasser zugegeben; pH von ca. 2,0. Der pH wird langsam auf 5,0 bis 5,5 erhöht mit

20 Teilen conc. ammoniakalischer Lösung, dabei wird die Temperatur allmählich bis 25°C erhöht.

Am Ende der Reaktion wird bei 50°C eine Stunde gerührt, während der pH-Wert mit 40 ml conc. Ammoniak bei 6,5 bis 7,0 gehalten wird.

Mit 120 Teilen Natriumchlorid wird der Farbstoff folgender Formel

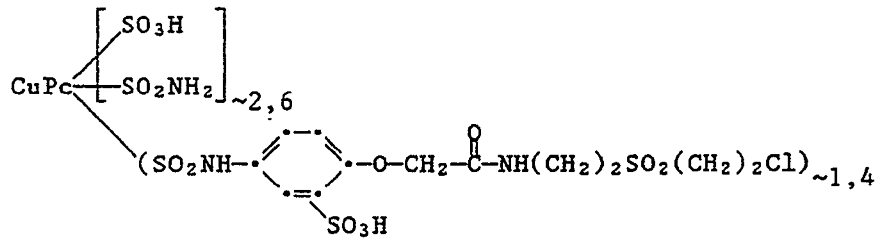

ausgesalzen. Er färbt Baumwolle in Türkistönen

Analog können folgende Farbstoffe synthetisiert werden Nr.

7

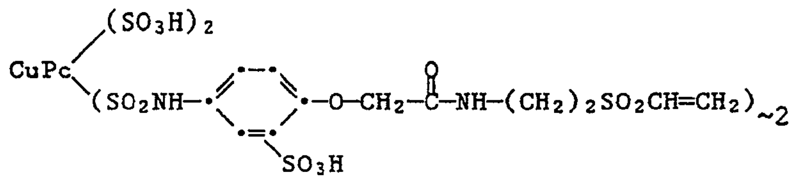

8

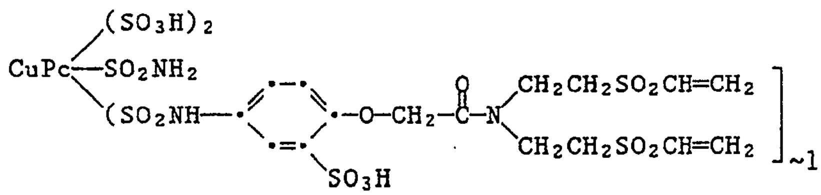

9

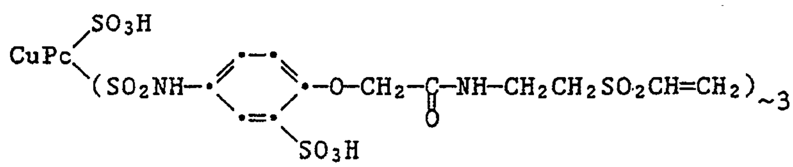

10

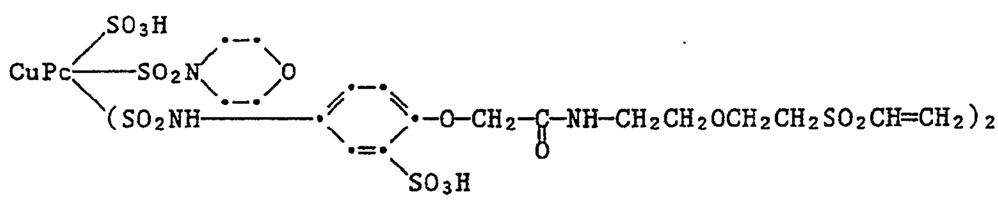

Färbevorschrift I

2 Teile des gemäss Beispiel 1 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40°C mit 100 Teilen eines Baumwollgewebes ein. Nach 45 Minuten werden 100 Teile einer Lösung, die pro Liter 16 g Natriumhydroxyd und 20 g kalzinierte Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

Färbevorschrift II

2 Teile des gemäss Beispiel 1 erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxyd und 20 g kalzinierte Soda enthält, zugegeben. Die Temperatur des Färbebades wird weitere 15 Minuten bei 35°C gehalten. Danach wird die Temperatur innerhalb von 20 Minuten uf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet.

Färbevorschrift III

8 Teile des gemäss Beispiel 1 erhaltenen Reaktivfarbstoffes werden in 400 Teilen Wasser gelöst; dazu gibt man 1400 Teile einer Lösung, die pro Liter 100 g Natriumsulfat enthält. In dieses Färbebad geht man bei 25°C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60°C erhöht. Die Temperatur wird weitere 90 Minuten auf 60°C gehalten. Danach wird gespült, während einer Viertelstunde mit einem nichtionogenen Waschmittel kochend geseift, nochmals gespült und getrocknet.

Färbevorschrift IV

4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumhydroxyd und 20 g kalzinierte Soda enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift V

6 Teile des gemäss Beispiel 1 erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas (38°Bé) enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift VI

2 Teile des gemäss Beispiel 1 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75 % seines Gewichtes zunimmt, und dann getrocknet. Dann imprägniert man das Gewebe mit einer 20°C warmen Lösung, die pro Liter 4 g Natriumhydroxyd und 300 g Natriumchlorid enthält, quetscht auf 75 % Gewichtszunahme ab, dämpft die Färbung während 30 Sekunden bei 100 bis 102°C, spült, seift während einer Viertelstunde in einer 0,3%igen kochenden Lösung eines nichtionogenen Waschmittels, spült und trocknet.

Druckvorschrift I

3 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

Druckvorschrift II

5 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102°C in gesättigtem Dampf. Das bedruckte Gewebe wird dann gespült, gegebenenfalls kochend geseift und nochmals gespült, und anschliessend getrocknet.

**Patentansprüche**

1. Reaktivfarbstoffe der Formel

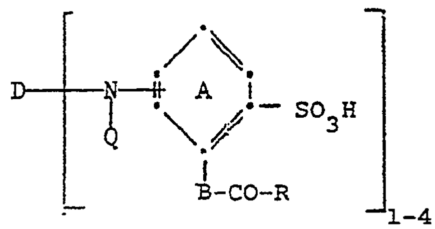

(1),

worin D der Rest eines Anthrachinon-, Phthalocyanin-, Formazan-, Azomethin-, Dioxazin-, Phenazin-, Triphenylmethan-, Xanthen-, Thioxanthon-, Nitroaryl-, Naphthochinon-, Pyrenchinon- oder Perylentetracarbimid-Farbstoffes; Q Wasserstoff oder Alkyl mit 1 bis 4 Kohlenstoffatomen, das durch Carboxy, Sulfo, Cyan, Hydroxy, $C_1$-$C_4$-Alkoxy oder Halogen substituiert sein kann; B ein Rest $-(CH_2)_n$, $-O-(CH_2)_n$ oder $-NH-(CH_2)_n$, wobei das Sauerstoffatom oder die -NH-Gruppe an das Ringsystem A gebunden ist; n = 1 bis 6; R ein Rest der Formel

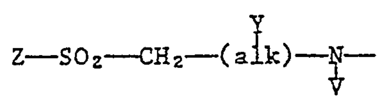

(1a)

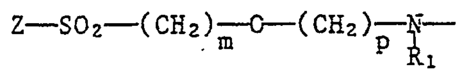

(1b)

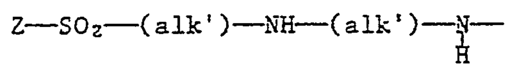

(1c)

oder

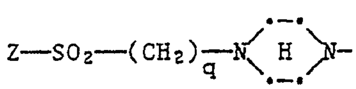

(1d);

Z β-Sulfatoäthyl, β-Thiosulfatoäthyl, β-Phosphatoäthyl, β-Acyloxyäthyl, β-Halogenäthyl oder Vinyl; alk ein Alkylenrest mit 1 bis 6 C-Atomen oder dessen verzweigte Isomere; Y Wasserstoff, Chlor, Brom, Fluor, Hydroxy, Sulfato, Acyloxy mit 1 bis 4 C-Atomen, Cyano, Carboxy, Alkoxycarbonyl mit 1 bis 5 C-Atomen, Carbamoyl, oder ein Rest $-SO_2$-Z, worin Z die oben angegebene Bedeutung hat; V Wasserstoff oder ein Alkylrest mit 1 bis 4 C-Atomen, der durch Carboxyoder Sulfogruppen oder durch deren Derivate, Alkoxygruppen mit 1 oder 2 C-Atomen, Halogen oder Hydroxy substituiert sein kann;
oder ein Rest

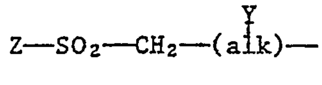

worin Z, alk und Y die angegebenen Bedeutungen haben; $R_1$ Wasserstoff oder $C_1$-$C_6$-Alkyl; alk' unabhängig voneinander Polymethylenreste mit 2 bis 6 C-Atomen oder deren verzweigte Isomere; m = 1 bis 6, p = 1 bis 6 und q = 1 bis 6 ist.

2. Reaktivfarbstoffe gemäss Anspruch 1, worin D der Rest eines Anthrachinonfarbstoffes ist.

3. Reaktivfarbstoffe gemäss Anspruch 1, worin D der Rest eines Phthalocyaninfarbstoffes ist.

4. Reaktivfarbstoffe gemäss Anspruch 2, worin D der Rest eines Anthrachinonfarbstoffes der Formel

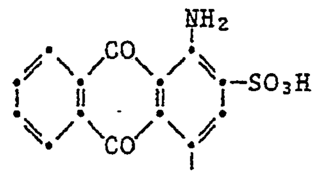

(2)

ist, wobei der Anthrachinonkern durch eine weitere Sulfogruppe substituiert sein kann, und der Farbstoff vorzugsweise mindestens 2 stark wasserlöslichmachende Gruppen enthält.

5. Reaktivfarbstoffe gemäss Anspruch 3, worin D der Rest eines Phthalocyaninfarbstoffes der Formel

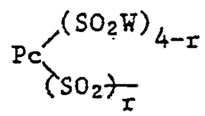

(3),

Pc der Rest eines Kupfer- oder Nickelphthalocyanins; W -OH und/oder $-NR_3R_4$; $R_3$ und $R_4$ unabhängig voneinander Wasserstoff oder Alkyl mit 1 bis 4 Kohlenstoffatomen, das durch Hydroxy, Alkoxy, Hydroxyalkoxy, Sulfo, Sulfato, oder Sulfatoalkoxy substituiert sein kann, oder worin $-NR_3R_4$ einen Morpholinorest bildet; und r = 1 bis 4 ist.

6. Reaktivfarbstoffe gemäss Anspruch 1, worin Z die β-Sulfatoäthyl-, β-Chloräthyl- oder Vinylgruppe ist.

7. Verfahren zur Herstellung von Reaktivfarbstoffen gemäss Anspruch 1, dadurch gekennzeichnet, dass man einen farbstoff der Formel

$$D-(X)_{1-4} \quad (4),$$

worin X ein Halogenatom ist, mit einem Amin der formel

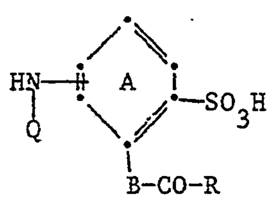

(5)

kondensiert, und gegebenenfalls eine weitere Umwandlungsreaktion anschliesst.

8. Verwendung der Reaktivfarbstoffe gemäss Anspruch 1, zum Färben oder Bedrucken von cellulosehaltigen Fasermaterialien.

9. Verwendung gemäss Anspruch 8, zum Färben oder Bedrucken von Baumwolle.

## Claims

1. A reactive dye of the formula

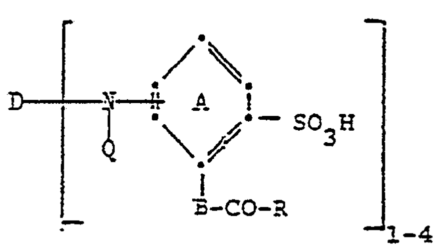

(1),

in which D is the radical of an anthraquinone, phthalocyanine, formazan, azomethine, dioxazine, phenazine, triphenylmethane, xanthene, thioxanthone, nitroaryl, naphthoquinone, pyrenequinone or perylenetetracarbimide dye; Q is hydrogen or alkyl which has 1 to 4 carbon atoms and can be substituted by carboxyl, sulfo,

cyano, hydroxyl, $C_1$-$C_4$alkoxy or halogen; B is a radical $-(CH_2)_n-$, $-O-(CH_2)_n-$ or $-NH-(CH_2)_n-$ where the oxygen atom or the -NH- group is attached to the ring system A and n is 1 to 6; R is a radical of the formula

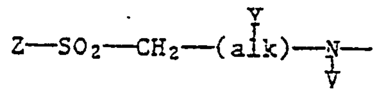
(1a)

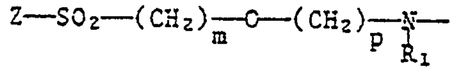
(1b)

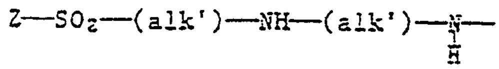
(1c)

or

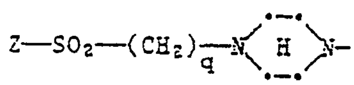
(1d);

Z is β-sulfatoethyl, β-thiosulfatoethyl, β-phosphatoethyl, β-acyloxyethyl, β-halogenoethyl or vinyl; alk is an alkylene radical having 1 to 6 C atoms or branched isomers thereof; Y is hydrogen, chlorine, bromine, fluorine, hydroxyl, sulfato, acyloxy having 1 to 4 C atoms, cyano, carboxyl, alkoxycarbonyl having 1 to 5 C atoms, carbamoyl or a radical $-SO_2-Z$ in which Z is as defined above; V is hydrogen or an alkyl radical which has 1 to 4 C atoms and can be substituted by carboxyl or sulfo groups or by derivatives thereof, alkoxy groups having 1 or 2 C atoms, halogen or hydroxyl; or is a radical

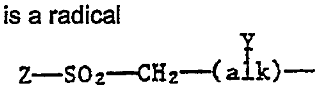

in which Z, alk and Y are as defined above; $R_1$ is hydrogen or $C_1$-$C_6$ alkyl; the alk's independently of one another are polymethylene radicals having 2 to 6 C atoms or branched isomers thereof; m is 1 to 6, p is 1 to 6 and q is 1 to 6.

2. A reactive dye according to claim 1, in which D is the radical of an anthraquinone dye.

3. A reactive dye according to claim 1, in which D is the radical of a phthalocyanine dye.

4. A reactive dye according to claim 2, in which D is the radical of an anthraquinone dye of the formula

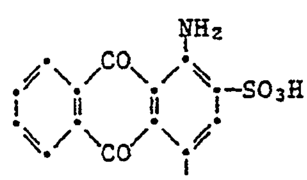
(2)

in which the anthraquinone nucleus can be substituted by a further sulfo group and the dye preferably contains at least 2 groups which strongly impart solubility in water.

5. A reactive dye according to claim 3, in which D is the radical of a phthalocyanine dye of the formula

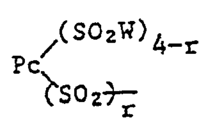
(3),

Pc is the radical of a copper or nickel phthalocyanine; W is -OH and/or $-NR_3R_4$; $R_3$ and $R_4$ independently of one another are hydrogen or alkyl which has 1 to 4 carbon atoms and can be substituted by hydroxyl, alkoxy, hydroxyalkoxy, sulfo, sulfato or sulfatoalkoxy, or in which $-NR_3R_4$ forms a morpholino radical; and r is 1 to 4.

6. A reactive dye according to claim 1, in which Z is the β-sulfatoethyl, β-chloroethyl or vinyl group.

7. A process for the preparation of a reactive dye according to claim 1, which comprises subjecting a dye of the formula

$D-(X)_{1-4}$ (4),

in which X is a halogen atom to a condensation reaction with an amine of the formula

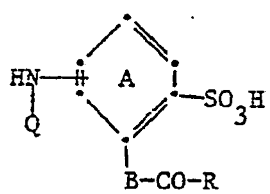

(5)

and, if appropriate, subsequently carrying out a further conversion reaction

8. The use of a reactive dye according to claim 1 for dyeing or printing cellulose-containing fibre materials.

9. Use according to claim 8 for dyeing or printing cotton.

**Revendications**

1. Colorants réactifs de formule

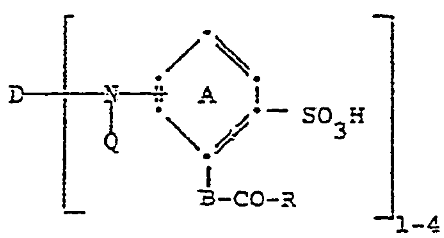

(1),

dans laquelle D est le reste d'un colorant anthraquinonique, phtalocyanine, formazan, azométhine, dioxazine, phénazine, triphénylméthane, xanthène, thioxanthone, nitroaryle, naphtoquinonique, pyrènequinonique ou pérylène-tétracarbimide; Q est un atome d'hydrogène ou un radical alkyle ayant de 1 à 4 atomes de carbone, qui peut être substitué par un atome d'halogène ou par un groupe carboxy, sulfo, cyano, hydroxy ou alcoxy en $C_1$-$C_4$; B est un radical $-(CH_2)_n-$, $-O-(CH_2)_n-$ ou $-NH-(CH_2)_n-$, l'atome d'oxygène ou le groupe -NH- étant lié au système cyclique A; n vaut de 1 à 6; R est un radical de fomule

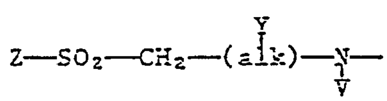

(1a)

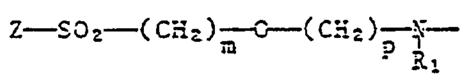

(1b)

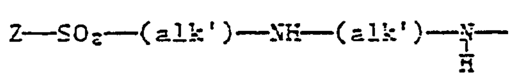

(1c)

ou

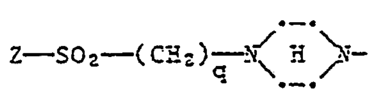

(1d);

Z est un radical β-sulfatoéthyle, β-thiosulfatoéthyle, β-phosphatoéthyle, β-acyloxyéthyle, β-halogénoéthyle ou vinyle; alk est un radical alkylène ayant de 1 à 6 atomes de carbone ou ses isomères ramifiés; Y est un atome d'hydrogène ou de chlore, de brome ou de fluor, ou un radical hydroxy, sulfato, acyloxy ayant de 1 à 4 atomes de carbone, cyano, carboxy, alcoxycarbonyle ayant de 1 à 5 atomes de carbone, carbamoyle, ou un radical $-SO_2-Z$, Z ayant la signication donnée plus haut; V est un atome d'hydrogène ou un radical alkyle ayant de 1 à 4 atomes de carbone, qui peut être substitué par des groupes carboxy ou sulfo ou par leurs dérivés, par des

groupes alcoxy ayant 1 ou 2 atomes de carbone, par des atomes d'halogène ou par le groupe hydroxy; ou un radical

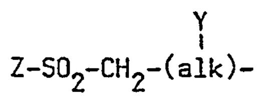

dans lequel Z, alk et Y ont les significations indiquées; $R_1$ est un atome d'hydrogène ou un groupe alkyle en $C_1$-$C_6$; les radicaux alk' sont, indépendamment l'un de l'autre, des radicaux polyméthylène ayant de 2 à 6 atomes de carbone ou leurs isomères ramifiés; m vaut de 1 à 6, p vaut de 1 à 6 et q vaut de 1 à 6.

2. Colorants réactifs selon la revendication 1, dans lesquels D est le reste d'un colorant anthraquinonique.

3. Colorants réactifs selon la revendication 1, dans lesquels D est le reste d'un colorant phtalocyanine.

4. Colorants réactifs selon la revendication 2, dans lesquels D est le reste d'un colorant anthraquinonique de formule

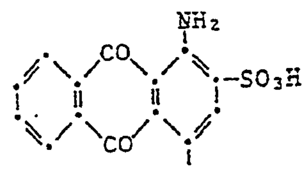

(2)

le noyau anthraquinonique pouvant être substitué par un autre groupe sulfo, et le colorant contenant de préférence au moins 2 groupes conférant fortement la solubilité dans l'eau.

5. Colorants réactifs selon la revendication 1, dans lesquels D est le reste d'un colorant phtalocyanine de formule

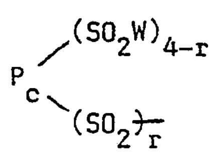

(3)

Pc est le reste d'une phtalocyanine de cuivre ou de nickel; W est -OH et/ou $-NR_3R_4$; $R_3$ et $R_4$ sont, indépendamment l'un de l'autre, un atome d'hydrogène ou un radical alkyle ayant de 1 à 4 atomes de carbone, qui peut être substitué par un groupe hydroxy, alcoxy, hydroxyalcoxy, sulfo, sulfato ou sulfatoalcoxy, ou $-NR_3R_4$ forme un radical morpholino; et r vaut de 1 à 4.

6. Colorants réactifs selon la revendication 1, dans lesquels Z est le groupe β-sulfatoéthyle, β-chloréthyle ou vinyle.

7. Procédé pour la préparation des colorants réactifs selon la revendication 1, caractérisé en ce que l'on condense un colorant de formule

$$D{-}({-}X)_{1-4}$$

dans laquelle X est un atome d'halogène, avec une amine de formule

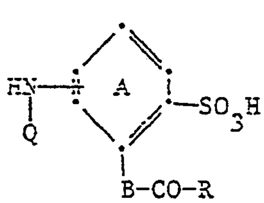

(5)

et éventuellement fait suite une autre réaction de conversion.

8. Utilisation des colorants réactifs selon la revendication 1, pour la teinture et l'impression de matériaux fibreux cellulosiques.

9. Utilisation selon la revendication 8, pour la teinture et l'impression du coton.